## Europäisches Patentamt

## European Patent Office

## Office européen des brevets

(11) Veröffentlichungsnummer: **0 279 187**
**A2**

## EUROPÄISCHE PATENTANMELDUNG

(21) Anmeldenummer: **88100668.8**

(22) Anmeldetag: **19.01.88**

(51) Int. Cl.⁴: **C01B 25/46**

(30) Priorität: **18.02.87 DE 3705069**

(43) Veröffentlichungstag der Anmeldung:
**24.08.88 Patentblatt 88/34**

(84) Benannte Vertragsstaaten:
**BE DE ES FR GB IT NL**

(71) Anmelder: **HOECHST AKTIENGESELLSCHAFT**
**Postfach 80 03 20**
**D-6230 Frankfurt am Main 80(DE)**

(72) Erfinder: **Schimmel, Günther, Dr.**
**Ehrenstrasse 16**
**D-5042 Erftstadt(DE)**
Erfinder: **Gradl, Reinhard, Dr.**
**Heimbacher Weg 27**
**D-5042 Erftstadt(DE)**
Erfinder: **Schrödter, Klaus, Dr.**
**Baadenberger Strasse 18**
**D-5000 Köln(DE)**

(54) **Verfahren zur Herstellung titanfreier Phosphorsäure.**

(57) Zur Herstellung titanfreier Phosphorsäure aus einem durch extraktive Reinigung von titanhaltiger Rohphosphorsäure mit einem nicht oder nur teilweise mit Wasser mischbarem organischem Lösungsmittel erhaltenen organischen Extrakt nimmt man das Waschen des organischen Extraktes in einer Waschung mit einer Stufenzahl $n > 4$ vor, wobei man den Rohextrakt in Stufe 1 zuführt und von einer der Stufen 2 bis $n-2$ eine wäßrige alkalische Lösung sowie von Stufe $n$ reines Waschwasser im Gegenstrom zum Rohextrakt führt.

EP 0 279 187 A2

## Verfahren zur Herstellung titanfreier Phosphorsäure

Die vorliegende Erfindung betrifft ein Verfahren zur Herstellung titanfreier Phosphorsäure durch extraktive Reinigung von titanhaltiger Rohphosphorsäure mit einem nicht oder nur teilweise mit Wasser mischbaren organischen Lösemittel, mehrstufiges Waschen der vom wäßrigen Raffinat abgetrennten organischen Extraktphase und Rückextraktion der gereinigten Phosphorsäure aus der Extraktphase mit Wasser.

Hochreine Phosphorsäure kann heutzutage neben dem sog. thermischen Weg auch auf Basis Rohphosphorsäure, welche durch Schwefelsäureaufschluß von Rohphosphat entstanden ist, nach dem sog. Extraktionsreinigungsverfahren hergestellt werden. Dabei wird die Rohsäure mit einem mit Wasser nicht oder teilweise mischbaren Lösemittel, z.B. einem Alkohol der Kettenlänge $C_4$-$C_6$, extrahiert, wobei der sog. Rohextrakt, die alkoholische Phosphorsäurelösung erhalten wird.

Darin sind noch Spuren von Kationen sowie ein größerer Teil der verunreinigenden Anionen enthalten, welche durch eine sich anschließende mehrstufige Waschung des Rohextrakts abgereichert bzw. entfernt werden können.

Die n-stufige Waschung wird im allgemeinen derart in einer Gegenstromfahrweise vorgenommen, daß in Stufe 1 der Rohextrakt und in Stufe n die Waschlöung eindosiert und im Gegenstrom zueinander geführt werden.

Diese Waschlösung kann Wasser bzw. Phosphorsäure sein oder aber auch eine alkalische Lösung wie Natronlauge oder Natriumphosphatlösung. Letzteres wird z.B. in der DE-B 22 29 602 oder der DE-A 25 38 720 beschrieben. Dabei ist bekannt, daß alkalihaltige Waschlösungen die Wascheffizienz erhöhen, insbesondere bezüglich der anionischen Verunreinigungen.

Diese Waschung, bei der Natronlauge in die letzte Waschstufe gegeben wird, kann zwar vorteilhaft zur Entfernung von Verunreinigungen angewendet werden, jedoch bleibt dabei eine der Löslichkeit in der organischen Phase entsprechende Menge Alkali im Rein-Extrakt gelöst zurück.

Bei einer sich anschließenden Reextraktion des organischen Extraktes mit Natronlauge zur Herstellung von Natriumphosphatlösung spielt dieser Na-Gehalt keine Rolle. Er wirkt jedoch störend, wenn eine Reinphosphorsäure durch Reextraktion mit Wasser hergestellt werden soll, da diese dann durch Na-Ionen verunreinigt ist (bis zu 0,5 Gew% Na/Gew% $P_2O_5$). Einige Spezifikationen lassen in reiner Phosphorsäure nur sehr niedrige Na-Konzentrationen zu (z.B. < 100 ppm Na).

Die Praxis hat jedoch gezeigt, daß durch ausschließliche Verwendung von Wasser oder Phosphorsäure als Waschlösung, der Ti-Gehalt des Extraktes nur mäßig abgereichert wird. Das wird darauf zurückgeführt, daß Titan als anionischer $TiF_6^{2-}$-Komplex vorliegt und die zugehörige $H_2TiF_6$-Säure der Phosphorsäure vergleichbare Verteilungskoeffizienten aufweist.

Auf diese Tatsache ist bereits in der DE-B 16 67 746 hingewiesen worden. Als Gegenmaßnahme zur Verringerung des Ti-Gehalts wurde daher vorgeschlagen, der Rohphosphorsäure vor der Extraktion eine Fe-III-Verbindung in beträchtlicher Menge zuzusetzen. Dadurch kann der Verteilungskoeffizient für Ti stark verringert werden.

Eine solche Arbeitsweise besitzt aber den gravierenden Nachteil, daß die erhöhte Fe-III-Konzentration in der Phosphorsäure die Extraktionsausbeute an $H_3PO_4$ stark verringert. Bekanntlich bewirken alle dreiwertigen Kationen, vor allem Fe und Al, einen solchen Effekt.

Es hat sich nun gezeigt, daß sich der Ti-Gehalt auch durch die Extraktwaschung zufriedenstellend abreichern läßt, wenn man nicht mit Wasser sondern mit Alkali-Lösung wäscht. Dieser Effekt ist wahrscheinlich auf Ionenpaarbildung zum $Na_2TiF_6$ zu erklären. Jedoch besitzt diese Waschung mit Na-Ionen den Nachteil, daß der gereinigte Extrakt beträchtliche Mengen an Na aufnimmt (vgl. das nachfolgende Beispiel 2).

Es war daher Aufgabe der Erfindung, nach einem Verfahren zu suchen, das es gestattet, den Ti-Gehalt von Naßverfahrensphosphorsäurelösungen in organischen Lösemitteln, die mit Wasser nicht oder wenig mischbar sind, durch Zugabe von Alkali-Ionen so zu vermindern, daß dabei der Gehalt an Alkali im Extrakt nicht ansteigt.

Solche organischen Phosphorsäurelösungen, wie sie bei der extraktiven Reinigung von Naßverfahrensphosphorsäure anfallen, weisen in der Regel einen $P_2O_5$-Gehalt von mindestens 9 Gew% auf.

Überraschenderweise wurde nun gefunden, daß sich diese Aufgabe in einfacher und wirkungsvoller Weise lösen läßt, wenn man das Wascher der organischen Extraktphase in einer Waschung mit einer Stufenzahl n > 4 vornimmt, dabei den Rohextrakt in Stufe 1 zuführt und von einer der Stufen 2 bis n-2 eine wäßrige alkalische Lösung sowie von Stufe n reines Waschwasser im Gegenstrom zum Rohextrakt führt.

Vorteilhafterweise wird dabei die alkalische Lösung in einer Menge von 0,5 bis 2,0 Gew%, berechnet als Na und bezogen auf $P_2O_5$ im Extrakt, und das Waschwasser in einer Menge eingesetzt,

die bezogen auf $P_2O_5$ im Extrakt $\geq$ 30 + 2 x (% Na $P_2O_5$ im Extrakt) ist.

Es empfiehlt sich, als alkalische Lösung eine solche von Natronlauge oder Natriumphosphat zu verwenden.

Zweckmäßigerweise wird die Alkali-Lösung direkt in die Mischzone der aus Mixer/Settlern bestehenden Waschung eingegeben. Auf diese Weise gelingt es einerseits, durch die Alkali-Zugabe des Titan in die wäßrige Phase zu überführen, andererseits kann in den Stufen zwischen der Alkali-Zugabe und Stufe n das Natrium vollständig ausgewaschen werden.

Aufgrund der veränderten Konzentrationsverhältnisse in dem Mixer, der mit Natronlage gespeist wird (Stufe a = 2 bis n-2), wird der Extrakt an dieser Stelle partiell reextrahiert und damit auch dessen Wassergehalt erniedrigt. Wird nun in Stufe n eine übliche, aber ungenügende Menge Wasser eindosiert, so findet in den Stufen zwischen a und n überwiegend eine Sättigung der organischen Phase mit Wasser statt, es wird aber kein wäßriges Raffinat gebildet und daher auch keine Waschwirkung ausgeübt. D. h. im Gegensatz zu einer ausschließlichen Waschung mit Wasser muß bei einer kombinierten Alkali/Wasser-Waschung die Waschwassermenge erhöht werden.

Dieser Sachverhalt wird anhand der nachfolgenden Beispiele näher erläutert und belegt. (Alle %-Angaben sind Gewichts-%.) Eine grüne Rohphosphorsäure mit 49,5 % $P_2O_5$ entsteht nach Reduzierung des Sulfatgehalts und der organischen Verunreinigungen in bekannter Weise mit $Ca(OH)_2$ und Aktivkohle. Die vorgereinigte Säure wird anschließend mit Amylalkohol in einer A) 8-stufigen bzw. B) 4-stufigen Gegenstromapparatur extrahiert, wobei im Fall A) zusätzlich im Gegenstrom zur Phosphorsäure konzentrierte Schwefelsäure in die 7. Mixer-Stufe eindosiert wird. Die dabei entstehenden phosphorsäurehaltigen Lösungsmittelphasen, die sog, Rohextrakte A bzw. B werden in einer 10-stufigen (Beispiele 1-6) und einer 5-stufigen (Beispiele 7-10) Mischer-Abscheider-Batterie mit Natronlauge und/oder Wasser gewaschen.

Die in Stufe 1 austretende Waschflüssigkeit, das Waschraffinat, wird in die 1. Extraktionsstufe rezirkuliert. Extraktion und Waschung werden gleichzeitig und kontinuierlich bis zur vollständigen Gleichgewichtseinstellung betrieben. Die genauen Parameter bzw. Ergebnisse sind in der nachfolgenden Tabelle zusammengefaßt.

Beispiel 1 (Vergleich, Rohextrakt A)

Die Extraktion von Rohphosphorsäure auf Basis Marokkophosphat lieferte einen Rohextrakt mit 14.2 % $P_2O_5$, einen Ti-Gehalt von 7 ppm sowie einen Na-Gehalt von 9 ppm. In Stufe 10 der Waschung wurden 31,7 % $H_2O/P_2O_5$ eingespeist. Der in dieser Stufe austretende Reinextrakt besaß 12,3 % $P_2O_5$, 5 ppm Na und 5 ppm Ti. Die Ti-Abreicherung war unbedeutend (17,5 %).

Beispiel 2 (Vergleich, Rohextrakt A)

In Abänderung von Beispiel 1 wurde in Stufe 10 anstelle von Wasser 12%ige Natronlauge eindosiert, und zwar 2,85 % $NaOH/P_2O_5$. Im Reinextrakt sind jetzt 11,4 % $P_2O_5$, 400 ppm Na und < 1 ppm Ti enthalten. Dieser Na-Gehalt von 3509 ppm/$P_2O_5$ ist für eine Reinsäure nicht zulässig.

Beispiel 3 (Vergleich, Rohextrakt A)

Die Extraktion von Marokko-Rohsäure lieferte einen Rohextrakt mit 14,3 % $P_2O_5$, 5,5 ppm Ti sowie 95 ppm Na. In Stufe 5 der Waschung wurde 50%ige Natronlauge in einer Menge von 2,89 % $NaOH/P_2O_5$ eindosiert, in Stufe 10 Wasser in einer Menge von 31,7 % $H_2O/P_2O_5$.

Der in Stufe 10 austretende Reinextrakt besaß 11,5 % $P_2O_5$, 19 ppm Na und 0,5 ppm Ti. Es wurde festgestellt, daß in den Settlern von Stufe 6 und 7 sich keine wäßrige Phase befand, weshalb dort auch keine Waschwirkung stattfand und ein zu hoher Na-Gehalt von 165,2 ppm/$P_2O_5$ resultiert. Die Wassermenge war zu gering.

Beispiel 4 (erfindungsgemäß, Rohextrakt A)

In Abänderung von Beispiel 3 wurde die Waschwassermenge in Stufe 10 auf 36,1 % $H_2O/P_2O_5$ erhöht. Der Reinextrakt besitzt jetzt 11,55 % $P_2O_5$, 6,3 ppm Na sowie 0,4 ppm Ti.

Beispiel 5 (erfindungsgemäß, Rohextrakt A)

Es wird in Abänderung vor Beispiel 4 weniger Natronlauge eingespeist (in Stufe 6), wodurch sich der Waschwasserbedarf verringert, aber auch die Titanabreicherung auf 9,3 ppm Ti/$P_2O_5$ zurückgeht.

Beispiel 6 (erfindungsgemäß, Rohextrakt A)

Es wird wie in Beispiel 4 eine erhöhte Na-Menge sowie Waschwassermenge verwendet. Jedoch wird die Natronlauge in Stufe 3 der Waschung eindosiert. Es wird ebenfalls ein Reinextrakt mit befriedigend niedrigem Na-und Ti-Gehalt erhalten, wobei bereits in Stufe 7 fast der Na-Endwert erreicht ist (vgl. Tabelle 1).

Beispiel 7 (Vergleich, Rohextrakt B)

Bei der Extraktion von Marokko-Rohsäure entstand ein Rohextrakt mit 11,2 % $P_2O_5$, 57 ppm Na und 3,1 ppm Ti. In Stufe 3 der Waschung wurde 50%ige Natronlauge in einer Menge von 2,11 % $NaOH/P_2O_5$ und in Stufe 5 Wasser in einer Menge von 32 % $H_2O/P_2O_5$ eindosiert. Der in Stufe 5 auftretende Reinextrakt hat 9,0 % $P_2O_5$, 0,6 ppm Ti und 17 ppm Na. Die Waschwassermenge war zu gering.

Beispiel 8 (erfindungsgemäß, Rohextrakt B)

In Abänderung von Beispiel 7 wird die Waschwassermenge auf 34,5 % $H_2O/P_2O_5$ erhöht. Im Reinextrakt sind 9,4 % $P_2O_5$, 5,5 ppm Na und 0,6 ppm Ti enthalten.

Beispiel 9 (erfindungsgemäß, Rohextrakt B)

In Abänderung von Beispiel 8 wird die Natronlauge in Stufe 2 eindosiert. Im Reinextrakt sind 9,0 % $P_2O_5$, 5 ppm Na und 0,6 ppm Ti enthalten.

Beispiel 10 (erfindungsgemäß, Rohextrakt B)

Die Extraktion von Kola-Rohsäure lieferte einen Rohextrakt mit 13,1 % $P_2O_5$, 28 ppm Ti und 210 ppm Na. In der 5-stufigen Waschung wurden in Stufe 2 50%ige Natronlauge in einer Menge von 1,80 % $NaOH/P_2O_5$ und 35 % $H_2O/P_2O_5$ eindosiert. Der in Stufe 5 abfließende Reinextrakt hat 11,4 % $P_2O_5$, 1,1 ppm Ti und 7 ppm Na.

| Beispiel | $c_{NaOH}$ (%) | Menge Na/$P_2O_5$ (Gew%) | Menge $H_2O$/$P_2O_5$ (Gew%) | Dosierung in Stufe NaOH | Dosierung in Stufe $H_2O$ | Stufenzahl Waschung | Konzentration bez. auf $P_2O_5$ im Rohextrakt ppm Na | Rohextrakt ppm Ti | Reinextrakt ppm Na | Reinextrakt ppm Ti |
|---|---|---|---|---|---|---|---|---|---|---|
| 1 | 0 | 0 | 31,7 | – | 10 | 10 | 63,4 | 49,3 | 40,7 | 40,7 |
| 2 | 12 | 1,63 | 0 | 10 | – | 10 | 1095 | 58,4 | 3509 | < 8,8 |
| 3 | 50 | 1,66 | 31,7 | 5 | 10 | 10 | 664 | 38,5 | 165,2 | 4,3 |
| 4 | 50 | 1,66 | 36,1 | 5 | 10 | 10 | 736 | 32,5 | 54,6 | 3,5 |
| 5 | 30 | 0,57 | 31,7 | 6 | 10 | 10 | 270 | 43,8 | 43,5 | 9,3 |
| 6 | 50 | 1,66 | 38,7 | 3 | 10 | 10 | 778 | 32,1 | 43,1 | 3,4 |
| 7 | 50 | 1,21 | 32,0 | 3 | 5 | 5 | 509 | 27,8 | 189 | 6,7 |
| 8 | 50 | 1,25 | 34,5 | 3 | 5 | 5 | 200 | 30,6 | 58,3 | 6,4 |
| 9 | 50 | 1,21 | 34,5 | 2 | 5 | 5 | 391 | 30,2 | 55,8 | 6,7 |
| 10 | 50 | 1,03 | 34,0 | 2 | 5 | 5 | 1603 | 214 | 61,4 | 9,7 |

Ansprüche

1. Verfahren zur Herstellung titanfreier Phosphorsäure durch extraktive Reinigung von titanhaltiger Rohphosphorsäure mit einem nicht oder nur teilweise mit Wasser mischbarem organischen Lösungsmittel, mehrstufiges Waschen der vom wäßrigen Raffinat abgetrennten organischen Extraktphase und Rückextraktion der gereinigten Phosphorsäure aus der Extraktphase mit Wasser, dadurch gekennzeichnet, daß man das Waschen der organischen Extraktphase in einer Waschung mit einer Stufenzahl n > 4 vornimmt, dabei den Rohextrakt in Stufe 1 zuführt und von einer der Stufen 2 bis n-2 eine wäßrige alkalische Lösung sowie von Stufe n reines Waschwasser im Gegenstrom zum Rohextrakt führt.

2. Verfahren nach Anspruch 1, dadurch gekennzeichnet, daß man die wäßrige alkalische Lösung in einer Menge von 0,5 bis 2 Gew% berechnet als Na und bezogen auf $P_2O_5$ im Extrakt einsetzt.

3. Verfahren nach Anspruch 1 oder 2, dadurch gekennzeichnet, daß man das Waschwasser in Stufe n in einer Menge einsetzt, die bezogen auf $P_2O_5$ im Extrakt $\geq 30 + 2 \times (\% \, Na/P_2O_5)$ ist.

4. Verfahren nach einem der Ansprüche 1 bis 3, dadurch gekennzeichnet, daß man als wäßrige alkalische Lösung eine Lösung von Natronlauge oder Natriumphosphat verwendet.